# EUROPEAN PATENT SPECIFICATION

(11) **EP 3 836 328 B1**
(45) Date of publication and mention of the grant of the patent: **23.07.2025**
(21) Application number: 19215212.2
(22) Date of filing: 11.12.2019
(51) Int. Cl.: H02H 3/18, H02J 7/34

(54) **REVERSE VOLTAGE PROTECTION**
VERPOLUNGSSCHUTZ
PROTECTION CONTRE LES TENSIONS INVERSES

(43) Date of publication of application: 16.06.2021
(73) Proprietor: Veoneer Sweden Safety Systems AB, 10302 Stockholm (SE)
(72) Inventor: AUBERTIN, Philippe, 95800 Cergy-Pontoise (FR)
(74) Representative: Reichert & Lindner Partnerschaft Patentanwälte

(56) References cited:
- EP-A1- 3 030 051
- CN-A- 102 946 049

## Description

The invention relates to the protection of components of an electric circuit against voltage of wrong polarity, in particular in the automotive context.

Electronic control units (ECUs) used in the automotive sector need to be protected against the application of voltage of wrong polarity, and are subjected to corresponding tests, like reverse battery connection or a negative pulse test according to ISO 7637.

State of the art protection for ECUs uses a p-n diode or a Schottky diode as protecting elements in circuits. Both diodes provide efficient protection against voltage of wrong polarity. With both diodes there is a significant drop of voltage across the diode during normal operation (i.e. with voltage of correct polarity) if used in the power supply of standard ECUs. This drop of voltage can easily be so large that an often intended operation with low battery voltage (e.g. 6 V) is not possible.

A second known approach relies on a MOSFET, controlled by an input voltage or by a differential voltage. With a MOSFET, there is a voltage drop too, but this drop is considerably reduced. Unfortunately, in comparison with the diodes mentioned above, the MOSFET shows a longer reaction delay time, as a result of which the protection offered by a MOSFET against fast transients of wrong polarity is rather poor.

Published application CN 102 946 049 A relates to a drive and temperature control unit for a quantum cascade laser. A diode is used to protect a load against a current of wrong polarity.

To provide more specific examples, standard automotive integrated circuits (ICs), like SBCs (system basic chips), ASICs, and including ICs for DC-DC boost converters, are configured to start operation at about 5.5 V. These ICs require only a relatively low electric current for their own operation, but usually are used to drive circuits where currents are in the range of 1 A to 2 A, for example at a battery voltage of 6 V. Such relatively high currents lead to a comparatively large drop of voltage across the diode used for protection, in the range of 0.8 V to 1.2 V, depending on diode type and temperature. Evidently, a voltage drop of 0.8 V to 1.2 V reduces a battery voltage of 6 V below the IC operation threshold of 5.5 V mentioned above. So, the ICs cannot be operated from a 6 V battery in circuitry with diode protection. If instead a MOSFET is used, operation of ICs from a 6 V battery is possible, however with the mentioned risk of fast transients of wrong polarity and at higher costs than with the diodes.

It therefore is the object of the invention to provide an electric system with protection against voltage of wrong polarity that avoids both too large a voltage drop and the risk of fast transients of wrong polarity.

This object is achieved by an electric system according to claim 1.

The dependent claims relate to advantageous embodiments.

The electric system according to the invention has circuitry with a first branch to supply electric current to a load, the first branch including a diode for protection of the first branch, and thus of the load, against voltage of wrong polarity; the diode can for example be a p-n diode or a Schottky diode. According to the invention, the circuitry also has a second branch to supply electric current to an integrated circuit, the second branch including a diode for protection of the second branch, and thus of the integrated circuit, against voltage of wrong polarity. The diode in the second branch may for example be a p-n diode or a Schottky diode; a Schottky diode is a preferred option as it offers better performance. The second branch may of course supply more than one integrated circuit. The integrated circuit is configured to control operation of the load.

This splitting of the circuitry into two branches has considerable advantages. The load in the first branch is not particularly sensitive to a voltage drop. Even at relatively high currents (e.g. 2 A) in the first branch, the voltage drop across the diode will not inhibit the correct functioning of the load to be supplied.

As the integrated circuit in the second branch requires only a relatively low current (e.g. in the range 5 mA to 50 mA), the voltage drop across the diode in the second branch is comparatively small (e.g. below 450 mV, in particular if a Schottky diode is used). So, in particular with respect to a supply voltage of 6 V (e.g. from a battery) for the electric system, the voltage drop across the diode in the second branch leaves a voltage above the 5.5 V threshold for operation of the integrated circuit. Nonetheless, there is good protection against voltage of wrong polarity, even against fast transients of wrong polarity.

In typical embodiments, the electric system includes a power supply, which may be a battery. The electrical system may need to operate at low battery voltage (e.g. at 6 V), in accordance with the specific examples mentioned previously. The invention is, however, not limited to these specific numbers of voltage and current provided above. As the voltage drop across a diode depends on the current through the diode, a reduction of this current results in a reduction of the voltage drop. If one or more ICs have to be supplied at a relatively low current, and a load has to be supplied at a relatively high current, then by splitting the circuitry into two branches, one for the ICs and one for the load, each branch having a diode, the invention generally achieves reduction of the voltage drop across the diode in the branch supplying the ICs sensitive to a voltage drop.

In an embodiment the electric system is provided to supply one or more electronic control units (ECUs) with electric current. In this embodiment, both the load and the integrated circuit are part of an electronic control unit. The electric system and the one or more electronic control units may be on board a vehicle.

In an embodiment the first branch is configured to supply electric current to a DC-DC boost converter, i.e. here the load is the DC-DC boost converter, and it is controlled by the integrated circuit supplied with electric current via the second branch.

Below the invention and its advantages will be illustrated with reference to the accompanying figures.
- Figure 1: shows an electric system according to prior art.
- Figure 2: shows an embodiment of the electric system according to the invention.

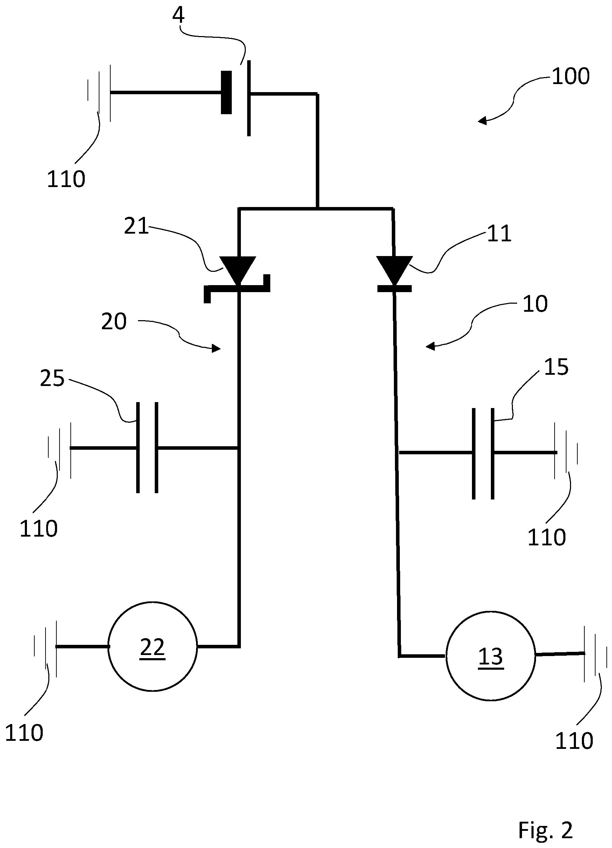

Figure 2 shows only an example of the electric system according to the invention and is not to be construed as a limitation of the invention to the specific embodiment shown.

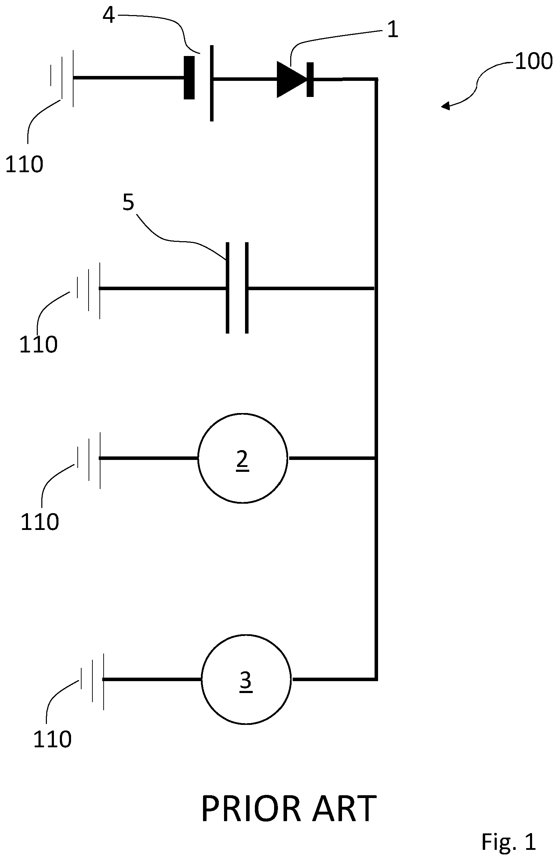

Fig. 1 shows a prior art electric system 100 with a battery 4 as power supply. In this example a p-n diode 1 provides protection against wrong polarity of the battery 4. The battery 4 supplies an integrated circuit 2 and a load 3 with electric current. The integrated circuit 2 is configured to control operation of the load 3; necessary connections for this control functionality are not shown here, as the invention is about the supply of electrical power to integrated circuit and load. A capacitor 5 is provided parallel to the integrated circuit 2 and the load 3. Battery 4, capacitor 5, integrated circuit 2, and load 3 are also connected to ground potential 110. In this prior art setup, both the electric current for the integrated circuit 2 and the electric current for the load 3 pass through the diode 1. While the current through the integrated circuit 2 may be relatively small, e.g. 50 mA, the current through the load may be rather high in comparison, e.g. 2 A. A current of somewhat over 2 A through the diode 1 leads to a significant voltage drop of e.g. 1 V across the diode 1. If the battery 4 operates at e.g. 6 V, there remain only 5 V for the integrated circuit 2. As has been mentioned before, if the integrated circuit 2 requires 5.5 V to operate, the voltage drop across the diode 1 is too large for the integrated circuit 2 to operate properly. For the load 3, on the other hand, the voltage drop is not a problem. So in this prior art setup, using a diode 1 for protecting against wrong polarity of the battery 4 results in the electric system 100 being in a non-operable state, as there is not enough voltage to supply the integrated circuit 2.

Fig. 2 shows an electric system 100 according to the invention with a battery 4 as power supply. The circuitry of the electric system 100 has a first branch 10 to supply electric current to a load 13, and a second branch 20 to supply electric current to one or more integrated circuits 22. The integrated circuit(s) 22 is/are configured to control operation of the load 13; necessary connections for this control functionality are not shown here, as the invention is about the supply of electrical power to integrated circuit(s) 22 and load 13. The first branch 10 includes a capacitor 15 parallel to the load 13. The second branch 20 includes a capacitor 25 parallel to the integrated circuit(s) 22. The electric current for the load 13 passes through a diode 11 in the first branch 10; the diode 11 in this example is a p-n diode. The electric current for the integrated circuit(s) 22 passes through a diode 21 in the second branch 20; the diode 21 in this example is a Schottky diode. The choice of diode types in the embodiment shown in the figure is merely an example and not a limitation of the invention; for example, each of diode 11 and diode 21 could be either a p-n diode or a Schottky diode. Assuming, as for the prior art example of Fig. 1, a battery 4 operating at 6 V and a current of 2 A for the load 13, i.e. in the first branch 10, a voltage drop of e.g. 1 V occurs across the diode 11. This voltage drop is not a problem for the operation of the load 13. The diode 11 protects the first branch 10, and thus the load 13, against wrong polarity of the battery 4. Assuming a current of 50 mA for the integrated circuit(s) 22, i.e. in the second branch 20, a voltage drop of e.g. 450 mV occurs across the Schottky diode 21. This voltage drop leaves a voltage above 5.5 V for the integrated circuit(s) 22, which is high enough for the integrated circuit(s) to operate. The Schottky diode 21 protects the second branch 20, and thus the integrated circuit(s) 22, against wrong polarity of the battery 4. Battery 4, capacitors 15 and 25, integrated circuit(s) 22, and load 13 are also connected to ground potential 110.

### List of Reference Signs

- 1: p-n diode
- 2: integrated circuit
- 3: load
- 4: battery
- 5: capacitor
- 10: first branch
- 11: p-n diode
- 13: load
- 15: capacitor
- 20: second branch
- 21: Schottky diode
- 22: integrated circuit
- 25: capacitor
- 100: electric system
- 110: ground potential

## Claims

1. Electric system (100) with circuitry including
a first branch (10) to supply electric current to a load (13), the first branch (10) including a diode (11) connected in series with the load (13);
**characterised by**
a second branch (20) to supply electric current to an integrated circuit (22), the second branch (20) including a diode (21) connected in series with the integrated circuit (22), wherein the integrated circuit (22) is configured to control operation of the load (13).

2. Electric system (100) according to claim 1, wherein the diode in the second branch (20) is a Schottky diode (21).

3. Electric system (100) according to claim 1 or 2, the electric system (100) including a power supply (4).

4. Electric system (100) according to claim 3, the power supply being a battery (4).

5. Electric system (100) according to one of the preceding claims, wherein the electric system (100) is provided to supply one or more electronic control units with electric current.

6. Electric system (100) according to claim 5, wherein the electric system (100) and the one or more electronic control units are on board a vehicle.

7. Electric system (100) according to one of the preceding claims, wherein the first branch (10) is configured to supply electric current to a DC-DC boost converter.

## Patentansprüche

1. Elektrisches System (100) mit Schaltkreisen umfassend
einen ersten Zweig (10) zur Versorgung einer Last (13) mit elektrischem Strom, wobei der erste Zweig (10) eine Diode (11) umfasst, die mit der Last (13) in Reihe geschaltet ist;
**gekennzeichnet durch**
einen zweiten Zweig (20) zum Zuführen von elektrischem Strom zu einer integrierten Schaltung (22), wobei der zweite Zweig (20) eine Diode (21) umfasst, die mit der integrierten Schaltung (22) in Reihe geschaltet ist, wobei die integrierte Schaltung (22) so konfiguriert ist, dass sie den Betrieb der Last (13) steuert.

2. Elektrisches System (100) nach Anspruch 1, wobei die Diode im zweiten Zweig (20) eine Schottky-Diode (21) ist.

3. Elektrisches System (100) nach Anspruch 1 oder 2, wobei das elektrische System (100) eine Energieversorgung (4) umfasst.

4. Elektrisches System (100) nach Anspruch 3, wobei die Energieversorgung eine Batterie (4) ist.

5. Elektrisches System (100) nach einem der vorhergehenden Ansprüche, wobei das elektrische System (100) dazu vorgesehen ist, eine oder mehrere elektronische Steuereinheiten mit elektrischem Strom zu versorgen.

6. Elektrisches System (100) nach Anspruch 5, wobei sich das elektrische System (100) und die eine oder mehreren elektronischen Steuereinheiten an Bord eines Fahrzeugs befinden.

7. Elektrisches System (100) nach einem der vorhergehenden Ansprüche, wobei der erste Zweig (10) so konfiguriert ist, dass er elektrischen Strom an einen DC-DC-Aufwärtswandler liefert.

## Revendications

1. Système électrique (100) avec des circuits comprenant
une première branche (10) pour alimenter en courant électrique une charge (13), la première branche (10) comprenant une diode (11) connectée en série avec la charge (13) ;
**caractérisé par**
une deuxième branche (20) pour alimenter en courant électrique un circuit intégré (22), la deuxième branche (20) comprenant une diode (21) connectée en série avec le circuit intégré (22), dans lequel le circuit intégré (22) est configuré pour contrôler le fonctionnement de la charge (13).

2. Système électrique (100) selon la revendication 1, dans lequel la diode de la deuxième branche (20) est une diode Schottky (21).

3. Système électrique (100) selon la revendication 1 ou 2, le système électrique (100) comprenant une alimentation électrique (4).

4. Système électrique (100) selon la revendication 3, l'alimentation électrique étant une batterie (4).

5. Système électrique (100) selon l'une des revendications précédentes, dans lequel le système électrique (100) est prévu pour alimenter en courant électrique une ou plusieurs unités de commande électronique.

6. Système électrique (100) selon la revendication 5, dans lequel le système électrique (100) et l'une ou les plusieurs unités de commande électronique sont à bord d'un véhicule.

7. Système électrique (100) selon l'une des revendications précédentes, dans lequel la première branche (10) est configurée pour alimenter en courant électrique un convertisseur CC-CC survolteur.
